# EUROPÄISCHE PATENTSCHRIFT

(11) **EP 1 692 023 B1**
(45) Veröffentlichungstag und Bekanntmachung des Hinweises auf die Patenterteilung: **13.02.2008**
(21) Anmeldenummer: 04802753.6
(22) Anmeldetag: 18.11.2004
(51) Int. Cl.: B60S 1/38, B60C 1/00, C08L 9/00

(54) **GUMMIMATERIAL**
RUBBER MATERIAL
MATERIAU EN CAOUTCHOUC

(30) Priorität: 05.12.2003 DE 10356942
(43) Veröffentlichungstag der Anmeldung: 23.08.2006
(73) Patentinhaber: ROBERT BOSCH GMBH, 70442 Stuttgart (DE)
(72) Erfinder: GEILENKIRCHEN, Robert, B-4624 Fleron (Liège) (BE)
(86) Internationale Anmeldenummer: PCT/DE2004/002540
(87) Internationale Veröffentlichungsnummer: WO 2005/056660

(56) Entgegenhaltungen:
- EP-A- 0 423 363
- EP-A- 0 796 893
- EP-A- 0 805 179
- EP-A- 0 831 121
- WO-A-99/39948
- GB-A- 935 425
- US-A- 4 075 373
- US-A- 5 604 286
- US-A- 5 817 719
- US-A- 5 844 044
- US-B1- 6 195 833

## Beschreibung

Die Erfindung betrifft ein Gummimaterial insbesondere für Wischblätter von Scheibenwischern oder für Kraftfahrzeugreifen, sowie dessen Verwendung nach dem Oberbegriff der unabhängigen Ansprüche.

### Stand der Technik

Bei Scheibenwischblättern ist es wichtig, dass sie sich der Kontur der Scheibe eines Kraftfahrzeugs möglichst gut anpassen können und auch bei unterschiedlichen Temperaturen flexibel bleiben. Daher werden Wischblätter in der Regel aus Elastomerprofilen gefertigt, wobei im Wesentlichen Gummimaterialien wie Naturkautschuk oder synthetische Kautschuksorten wie Chloroprenkautschuk oder EPDM verwendet werden. Daneben sind auch Wischblätter aus Silikonkautschuk oder Polyurethankautschuk bekannt.

Weiterhin werden derartige Gummimaterialien beispielsweise auch als Schwingungsdämpfer in Autoreifen eingesetzt. So ist aus der DE 42 36 218 C2 ein Gummimaterial bekannt, das ein Copolymer in Form von EPDM enthält sowie gegebenenfalls weitere Gummikomponenten wie Naturkautschuk oder einen synthetischen Kautschuk wie Polyisopren.

Die Gummimaterialien werden bei der Herstellung einer Vulkanisation unterzogen. Dazu enthält das Gummimaterial neben den eigentlichen Vulkanisierungsmitteln, die zur Vernetzung des Gummimaterials führen, zusätzlich sogenannte Vulkanisationsbeschleuniger. Da das Gummimaterial eine Mischung mehrerer Gummikomponenten darstellt, kann der Vernetzungsgrad der unterschiedlichen Gummikomponenten in Abhängigkeit ihrer Vernetzungsgeschwindigkeit bei der Vulkanisation verschieden ausfallen. Dies hat zur Folge, dass schwach vernetzende Gummikomponenten im ausgehärteten Zustand nicht ausreichend abriebfest sind und das Gummimaterial beispielsweise bei der Anwendung als Wischgummi zur Bildung von Schmierstreifen auf der zu reinigenden Oberfläche neigt.

Eine derartige Problematik tritt beispielsweise bei Wischgummis auf, die eine Mischung aus Naturkautschuk und Polybutadien enthalten. Bei der Vulkanisation eines entsprechenden Rohgummimaterials bewirkt ein zugesetzter Vulkanisationsbeschleuniger insbesondere eine Vernetzung des Naturkautschuks während hingegen das ebenfalls enthaltene Polybutadien nur langsam vernetzt wird. Das resultierende Gummimaterial zeigt auf Grund des nicht vollständig vernetzten Polybutadiens ein unbefriedigendes Wischbild.

Aus der EP 831121, der EP 805 19 A, der EP 796 893 A, der US 5, 844, 044, der US 5, 604, 286 und der US 5, 817, 719 ist ein Gummimaterial für Fahrzeugreifen bekannt, das ein Copolymer auf der Basis von Isopren und mindestens einem weiteren polymerisierbaren Monomer enthält. Weiter ist aus der US 4, 075, 373 eine Gummibeschichtung für metallische Oberflächen bekannt, die ein Copolymer aus Isobutadien und Isopren aufweist. In allgemeiner Form sind Copolymerisate aus Butadien und Isopren aus der GB 935, 425 bekannt. Aus der US 6, 195, 833 B1 und der EP 423 363 A sind Wischerblätter für Scheibenwischer auf Basis von Isoprenkautschuk bekannt. Weiterhin ist aus der WO 99/399 48 ein Wischerblatt bekannt, das ein Kopfteil aus einem Dientypgummi und ein Umlegesteg sowie einen Keil aus Chloroprengummi aufweist.

Aufgabe der vorliegenden Erfindung ist es, ein Gummimaterial bereitzustellen, das die Erzeugung abriebfester Profile ermöglicht.

### Vorteile der Erfindung

Das erfindungsgemäße Gummimaterial mit den kennzeichnenden Merkmalen des Anspruchs 1 hat gegenüber dem Stand der Technik den Vorteil, dass ein für die Fertigung von Wischblättern bzw. Fahrzeugreifen geeignetes Gummimaterial mit einem günstigen Eigenschaftsprofil verfügbar ist, das gut reproduzierbar und somit kostengünstig hergestellt werden kann. Dies wird erreicht, indem das Gummimaterial ein Copolymer aus Isopren und mindestens einem weiteren polymerisierbaren Monomer enthält.

Der Erfindung liegt die Erkenntnis zugrunde, dass Naturkautschuk als Bestandteil eines Rohgummimaterials bei der Vulkanisation eine relativ rasche Vernetzung zeigt, während weitere Gummibestandteile wie beispielsweise Polybutadien eine relativ geringe Vernetzungsgeschwindigkeit zeigen. Wird nun der Naturkautschuk des Rohgummimaterials durch das isostrukturelle Isopren ersetzt, so bietet dies die Möglichkeit, rasch vernetzende Isopren-Einheiten im Rahmen einer Copolymerisation mit schwach vernetzenden Butadien-Einheiten zu einem Copolymer zu verbinden, das bei einer nachfolgenden Vulkanisation einer einheitlichen Vernetzung unterliegt. Auf diese Weise werden vorteilhaft die sonst auftretenden Beeinträchtigungen des Wischbilds durch Schmierstreifen bedingt durch schwach vernetztes Polybutadien vermieden.

Vorteilhafte Weiterbildungen der Erfindung ergeben sich aus den in den Unteransprüchen genannten Maßnahmen.

So ist vorteilhaft, wenn das Gummimaterial als Füllstoff insbesondere eine Mischung von Ofen- und Thermalruß enthält, da sich diese hinsichtlich ihrer Körnung und der für das Gummimaterial resultierenden mechanischen Eigenschaften stark unterscheiden und somit über das Mischungsverhältnis der beiden Rußsorten eine optimale Einstellung der mechanischen Eigenschaften des Gummimaterials gestatten.

Weiterhin ist von Vorteil, wenn das Gummimaterial weiterhin einen Weichmacher enthält. Dieser ermöglicht einen höheren Füllgrad des Gummimaterials ohne Verschlechterung seiner mechanischen Eigenschaften.

### Zeichnung

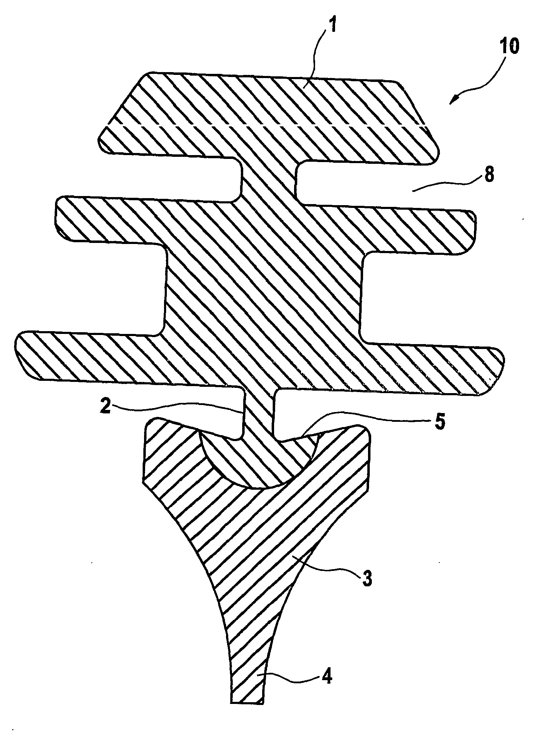

Ein Ausführungsbeispiel der Erfindung ist in der Zeichnung dargestellt und in der nachfolgenden Beschreibung näher erläutert. Es zeigt Figur 1 einen Querschnitt durch ein erfindungsgemäßes Wischblatt mit einer außenliegenden Federschiene.

### Ausführungsbeispiel

In Figur 1 ist ein Wischblatt 10 gemäß einem ersten Ausführungsbeispiel der vorliegenden Erfindung dargestellt. Das Wischblatt weist eine im wesentlichen streifenförmige Ausgestaltung auf. Es umfasst ein verbreitertes Kopfteil 1, das über einen Umlegesteg 2 mit einem Keil 3 verbunden ist. Das Kopfteil 1 weist Aussparungen 8 für die Aufnahme einer nicht dargestellten außenliegenden Federschiene auf. Der Keil 3 verjüngt sich an seiner dem Kopfteil 1 gegenüberliegenden und der zu reinigenden Glasfläche zugewandten Seite zu einer Wischlippe 4.

Das Kopfteil 1 bzw. der Umlegesteg 2 ist vorzugsweise aus EPDM (Ethylen-Propylen-Dien-Terpolymer), EPR (Ethylen-Propylen-Copolymer), CR (Chloropren), NR (Naturkautschuk), BR (Polybutadien), SBR (Styrol-Butadien-Gummi) oder IR (Polyisopren) bzw. Mischungen derselben gefertigt. Der Keil 3 und/oder die Wischlippe 4 sind aus einem Gummimaterial gefertigt, das ein Copolymer auf der Basis von Isopren enthält. Das Copolymer kann bspw. ein Copolymer von Isopren und Butadien sein. Anstelle von Butadien können jedoch auch eines oder mehrere andere, mit Isopren copolymerisierbare Monomere verwendet werden. Darüber hinaus kann der Keil 3 bzw. die Wischlippe 4 als weitere Bestandteile des Gummimaterials beispielsweise Naturkautschuk, Polybutadien oder eine andere der als Material für kopfteil 1 bzw. Umlegesteg 2 genannten Gummisorten enthalten. Weiterhin ist es möglich, zur besseren Verankerung des Umlegestegs 2 im Keil 3 einen dem Umlegesteg 2 benachbarten Bereich 5 des Keils 3 aus dem Material des Umlegestegs 2 zu fertigen.
Ebenfalls möglich ist es, den Keil 3 aus dem Gummimaterial des Kopfteils 1 bzw. des Umlegestegs 2 oder aus einem weiteren Gummimaterial, das sich von dem des Kopfteils 1 bzw. der Wischlippe 4 unterscheidet, zu fertigen.

Der Materialauswahl für den Keil 3 bzw. die Wischlippe 4 liegt der Gedanke zu Grunde, mit geringer Geschwindigkeit vernetzende Gummisorten wie Polybutadien und rasch vernetzende Gummisorten wie beispielsweise Naturkautschuk durch Copolymerisation in einem Molekülstrang miteinander zu verbinden, sodass dabei ein einheitlich vernetzendes Gummimaterial entsteht. Die Mengenanteile der für die Copolymerisation eingesetzten Monomere können den für den konkreten Anwendungszweck erforderlichen Verhältnissen entsprechend angepasst werden.

Da Naturkautschuk per se bereits als Polymer vorliegt, wird ersatzweise auf das isostrukturelle Monomer Isopren zurückgegriffen und dieses mit einem oder mehreren, Monomeren anderer Struktur bzw. Zusammensetzung copolymerisiert.

Das Gummimaterial enthält gegebenenfalls weiterhin ein Homogenisierungsmittel, das eine bessere Durchmischbarkeit der verschiedenen Gummisorten bzw. -fraktionen im Rohgummimaterial gewährleistet. Gleichzeitig führt es zu einer Stabilisierung des gesamten Rohgummimaterials als stabile Dispersion von Füll- und Hilfsstoffen in der Rohgummimasse. Als Homogenisierungsmittel werden beispielsweise aromatische oder aliphatische Harze eingesetzt.

Das Gummimaterial enthält weiterhin mindestens einem Füllstoff. Der Füllstoff ist vorzugsweise aus Ruß gebildet. Als Ruß wird beispielsweise sogenannter Ofenruß eingesetzt. Es hat sich jedoch als vorteilhaft erwiesen, als Füllstoff eine Mischung von Ofenruß und Thermalruß einzusetzen. Während Ofenruß im allgemeinen eine relativ feine Körnung aufweist und bei hohen Füllgraden zu einem zwar abriebfesten, jedoch relativ harten Gummimaterial führt, weist Thermalruß eine grobe Körnung auf, die auch bei hohen Füllgraden nur zu einer geringen Zunahme der Härte des Gummimaterials führt.

Vorzugsweise werden die Mengenanteile der beiden Rußsorten so gewählt, dass ein für die Verarbeitung des Gummimaterials günstiger möglichst hoher Füllgrad erreicht wird, andererseits die Gesamthärte des ausgehärteten Gummimaterials nicht zu hoch wird, da das System sonst spröde und beispielsweise nicht mehr wischfähig ist.

Ein besonders hoher Füllgrad kann erreicht werden, wenn dem Gummimaterial zusätzlich ein Weichmacher zugesetzt wird, da so der mit steigenden Füllstoffgehalten zunehmenden Versprödung des Gummimaterials wirkungsvoll entgegengewirkt werden kann. Als Weichmacher eignen sich beispielsweise synthetische Weichmacher sowie Mineralöl.

Üblicherweise werden bei der Herstellung von Gummimaterialien dem Rohgummimaterial Trocknungsmittel zugesetzt. Bei Verzicht auf derartige Trocknungsmittel führt die in den Ausgangsstoffen enthaltene Feuchtigkeit während der Extrusion oder Vulkanisation zu einer porösen Oberfläche des auf diese Weise erzeugten Gummiprofils. Ein gängiges Trocknungsmittel, dass bei Gummimaterialien zur Anwendung kommt, ist beispielsweise Kalziumoxid. Dieses bildet bei Kontakt mit der im Gummimaterial enthaltenen Feuchtigkeit Kalziumhydroxid. Bei Verwendung von Kalziumoxid können jedoch Probleme entstehen, wenn es zu einer Kristallbildung des resultierenden Kalziumhydroxids kommt.

Aus diesem Grund erfolgt die Herstellung des vorliegenden Gummimaterials vorzugsweise ohne einen Zusatz von Kalziumoxid. Um dennoch eine ausreichend gute Oberflächengüte eines erzeugten Profils zu erreichen, wird zum einen der Feuchtigkeitsgehalt der zur Erzeugung des Gummimaterials benötigten Ausgangsmaterialien überprüft und diese gegebenenfalls separat unter Feuchtigkeitsausschluss gelagert. Weiterhin wird die Vulkanisation des Rohgummimaterials mit einer möglichst kurzen Reaktionszeit durchgeführt. Hierfür eignet sich insbesondere ein auf Peroxiden beruhendes Vulkanisationssystem.

Exemplarisch ist im folgenden ein Ausführungsbeispiel eines Gummimaterials A zur Fertigung eines Kopfteils 1 und eines Gummimaterials B zur Fertigung eines Umlegestegs 2, eines Keils 3 oder eine Wischlippe 4 eines Wischblatt bzw. deren Zusammensetzung bezogen jeweils auf 100 Gewichtsteile an Elastomer (phr) aufgeführt.

| Substanz | Gehalt in phr Gummimaterial 1 | Gehalt in phr Gummimaterial 2 |
|---|---|---|
| EPDM 1 | 0.5 -100 | - |
| EPDM 2 | 0.5 - 100 | - |
| IR-BR-Copolymer | - | 0.5 -100 |
| NR | - | 0-70 |
| BR | | 0-70 |
| Homogenisierungsmittel | 0-10 | 0-10 |
| Ofenruß | 20 - 120 | 5 - 120 |
| Thermalruß | 20-120 | 0 - 120 |
| Peroxid | 0-10 | - |
| Schwefel | 0 - 1 | 0-4 |
| Beschleuniger | - | 0.2 - 10 |
| Hilfsstoffe | 20 - 105 | 0-50 |

Die Herstellung des Gummimaterials erfolgt, indem zunächst eine oder mehrere Gummisorten mit dem oder den Füllstoffen, dem Homogenisierungsmittel und weiteren Verarbeitungshilfsstoffen einem Extruder zugeführt werden und dort eine intensive Vermischung erfahren. Alternativ können die Ausgangsmaterialien auch einem Mischer zugeführt, dort vermischt und beispielsweise formgepresst oder einem Spritzgussverfahren zugeführt werden.

Auf diese Weise wird ein Profilstrang erzeugt, wobei dieser für die Erzeugung von Wischgummis für Scheibenwischer die Form eines Doppelstranges hat, bei dem zwei Wischgummi-Einzelstränge im Bereich der Wischlippe in Längsrichtung des Doppelstranges miteinander verbunden sind. Der erzeugte Doppelstrang wird zur Vulkanisation beispielsweise einem Salzbad oder einem Ofen zugeführt und dort bei einer Temperatur von ca. 205°C vulkanisiert. In einem weiteren Schritt erfolgt bei Bedarf eine Oberflächenmodifizierung beispielsweise durch Grafitieren, Halogenieren, Lackieren oder Beschichten. Danach wird das vulkanisierte Elastomerprofil abschließend in Längsrichtung geschnitten.

Alternativ ist es möglich, gezielt nur bestimmte Oberflächenpartien eines Wischblattes zu modifizieren. So kann durch geeignete Prozessführung bei gezieltem Abdecken nicht zu modifizierender Bereiche des Wischblatts beispielsweise lediglich die in Kontakt mit der zu reinigenden Oberfläche stehende Wischlippe modifiziert werden oder zusätzlich bzw. alternativ eine Führungsnut des Wischblattes, mit dem das Wischblatt in eine entsprechende Wischblatthalterung eingeführt werden kann.

## Patentansprüche

1. Gummimaterial eines Wischblatts für Scheibenwischer, **dadurch gekennzeichnet, dass** ein Copolymer auf der Basis von Isopren und mindestens einem weiteren polymerisierbaren Monomer enthalten ist.

2. Gummimaterial nach Anspruch 1, **dadurch gekennzeichnet, dass** ein Copolymer aus Isopren und Butadien enthalten ist.

3. Gummimaterial nach einem der Ansprüche 1 und 2, **dadurch gekennzeichnet, dass** weiterhin ein Füllstoff enthalten ist, und dass der Füllstoff eine Mischung aus Ofenruß und Thermalruß umfasst.

4. Gummimaterial nach einem der Ansprüche 1 bis 3, **dadurch gekennzeichnet, dass** das Gummimaterial 20 - 150 Gewichtsteile eines Füllstoffs bezogen auf 100 Gewichtsteile an Elastomer enthält.

5. Gummimaterial nach einem der vorhergehenden Ansprüche, **dadurch gekennzeichnet, dass** ein Weichmacher und/oder Mineralöl enthalten ist.

6. Gummimaterial nach einem der vorhergehenden Ansprüche, **dadurch gekennzeichnet, dass** das Gummimaterial zusätzlich Naturkautschuk und/oder Polybutadien enthält.

7. Wischblatt für Scheibenwischer aus einem Gummimaterial gemäß einem der Ansprüche 1 bis 6, **dadurch gekennzeichnet, dass** ein Steg (2), ein Keil (3) und/oder eine Wischlippe (4) des Wischblatts, ein Copolymer aus Isopren und Butadien enthält.

8. Wischblatt gemäß Anspruch 6 oder 7, **dadurch gekennzeichnet, dass** ein Kopfteil (1) und/oder ein Steg (2) EPDM und/oder CR enthält.

## Claims

1. Rubber material of a wiper blade for windscreen wipers, **characterized in that** a copolymer based on isoprene and on at least one further polymerizable monomer is present.

2. Rubber material according to Claim 1, **characterized in that** a copolymer composed of isoprene and butadiene is present.

3. Rubber material according to Claim 1 or 2, **characterized in that** a filler is moreover present, and **in that** the filler encompasses a mixture composed of furnace black and thermal black.

4. Rubber material according to any of Claims 1 to 3, **characterized in that** the rubber material comprises from 20 to 150 parts by weight of a filler, based on 100 parts by weight of elastomer.

5. Rubber material according to any of the preceding claims, **characterized in that** a plasticizer and/or mineral oil is present.

6. Rubber material according to any of the preceding claims, **characterized in that** the rubber material also comprises natural rubber and/or polybutadiene.

7. Wiper blades for windscreen wipers composed of a rubber material according to any of Claims 1 to 6, **characterized in that** a web (2), a wedge-shaped section (3) and/or a wiper lip (4) of the wiper blade comprises a copolymer composed of isoprene and butadiene.

8. Wiper blade according to Claim 6 or 7, **characterized in that** a stock (1) and/or a web (2) comprises EPDM and/or CR.

## Revendications

1. Matériau en caoutchouc de lame d'essuyage de balais d'essuie-glace,
**caractérisé par**
un copolymère à base d'isoprène et d'au moins un autre monomère polymérisable.

2. Matériau en caoutchouc selon la revendication 1,
**caractérisé en ce qu'**
il contient un copolymère d'isoprène et de butadiène.

3. Matériau en caoutchouc selon l'une des revendications 1 et 2,
**caractérisé en ce qu'**
il contient en outre une charge qui est un mélange de noir de fumées et de noir thermique.

4. Matériau en caoutchouc selon l'une des revendications 1 à 3,
**caractérisé en ce que**
le matériau en caoutchouc contient entre 20 et 150 parties pondérales d'une charge rapportée à 100 parties pondérales d'élastomère.

5. Matériau en caoutchouc selon l'une des revendications précédentes,
**caractérisé par**
un assouplisseur et/ ou de l'huile minérale.

6. Matériau en caoutchouc selon l'une des revendications précédentes,
**caractérisé en ce que**
le matériau en caoutchouc contient en plus, du caoutchouc naturel et/ou du polybutadiène.

7. Lame d'essuyage de balai d'essuie-glace en un matériau en caoutchouc selon l'une des revendications 1 à 6,
**caractérisé par**
une âme (2), un point (3) et/ou une lèvre d'essuyage (4) de la lame d'essuyage en copolymère d'isoprène et de butadiène.

8. Matériau en caoutchouc selon l'une des revendications 6 ou 7,
**caractérisé par**
une partie de tête (1) et/ou une âme (2) avec du caoutchouc EPDM et/ou CR.
